# EUROPÄISCHE PATENTANMELDUNG

(11) **EP 0 866 102 A2**
(43) Veröffentlichungstag der Anmeldung: **23.09.1998**
(21) Anmeldenummer: 98105040.4
(22) Anmeldetag: 19.03.1998
(51) Int. Cl.: C09D 5/02, C09D 7/12

(54) **Beschichtungsmasse und deren Verwendung**

(30) Priorität: 20.03.1997 DE 19711664
(71) Anmelder: STO AG, D-79778 Stühlingen (DE)
(72) Erfinder: Güntert, Manfred, 79780 Stühlingen (DE); Grochal, Peter, Dr., 79761 Waldshut (DE)
(74) Vertreter: Patentanwälte Leinweber & Zimmermann

(57) **Zusammenfassung**

Die Beschichtungsmasse umfaßt eine filmbildende wäßrige Kunstharzdispersion. Um eine Verarbeitung trotz Verzicht auf den Einsatz von Lösungsmitteln auch bei tiefen Temperaturen bis etwa -5°C zu erreichen, ist die erfindungsgemäße Beschichtungsmasse gekennzeichnet durch einen den Gefrierpunkt erniedrigenden hohen Salzgehalt sowie chemische und gegebenenfalls UV-Vernetzer, die durch eine pH-Wert-Einstellung größer als 9 mit Ammoniak blockiert sind, bis durch Ammoniakverdunstung der Abbindemechanismus in Funktion tritt.

## Beschreibung

Die Erfindung bezieht sich auf eine Beschichtungsmasse mit einer filmbildenden wäßrigen Kunstharzdispersion.

Eine derartige Beschichtungsmasse findet insbesondere bei einem an einer Gebäudewand festlegbaren Fassadensystem, insbesondere Wärmedämmverbundsysem Einsatz, bei dem sie eine außenseitige Armierungs- und Deckbeschichtung bildet. Fassadensysteme in Form von Wärmedämmverbundsystemen sind seit langem bekannt. Die DE 32 02 960 z.B. beschreibt den Aufbau eines Wärmedämmverbundsystems wie folgt: Auf ein Mauerwerk wird mit einer Klebemasse eine Wärmedämmplatte, insbesondere aus extrudiertem Polystyrol-Hartschaum aufgebracht. An ihrer Außenseite folgt eine mehrlagige armierte Putzbeschichtung, die eine Armierungsschicht aus einer Armierungsmasse und einem Armierungsgewebe sowie eine Deckbeschichtung aus einem Kunstharzputz umfaßt, ggf. mit einem zusätzlichen Voranstrich auf der Armierungsschicht, um die Wärmedämmplatte vor Verwitterung zu schützen.

Bei der hinterlüfteten, vorgehängten Fassade gemäß EP 059 977 für beliebige Wände, also beispielsweise Außenmauern, Holzwände usw., wird auf einem Gitter- oder Lattenrost einer Plattenverkleidung aus bündig abschließenden Platten zunächst eine Armierungsschicht und dann eine Deckbeschichtung aufgebracht.

Derartige Beschichtungssysteme können auch direkt auf verschiedensten Untergründen eingesetzt werden.

Bei den verwendeten Armierungs- und Deckbeschichtungen mit Beschichtungsmassen der eingangs genannten Art werden in der Regel organische Bindemittel eingesetzt, die in getrocknetem Zustand ein thermoplastisches, teilweise auch elastisches Verhalten zeigen. Diese als Filmbildung bekannte Eigenschaft beruht auf der physikalischen Trocknung, sprich der Verdunstung des vorhandenen Wassers. Bei der Verdunstung des Wassers koaleszieren die Kunstharzteilchen des organischen Bindemittels zu einem zusammenhängenden Film.

Nachteilig an den vorstehend beschriebenen Systemen ist die Eigenschaft, daß eine einwandfreie Verarbeitung nur in den warmen Jahreszeiten möglich ist. Kalte und feuchte Witterungsbedingungen verhindern die Trocknung der Beschichtungmassen. Bei nächtlicher Unterschreitung des Gefrierpunktes kann es in der Trocknungsphase sogar zu Frostschäden kommen.

Da die Bauindustrie in starkem Umfang versucht, auch während der kalten Jahreszeit zu produzieren, sind Systeme gefragt, die einen Einsatz der Beschichtungsmasse auch bei ungünstigen Witterungen ermöglichen.

Bei der Anwendung von Putzen auf der Basis organischer Kunststoffe war man bisher auf wäßrige Dispersionsputze beschränkt, wenn diese auf Polystyrol-Hartschaumplatten aufgebracht werden sollten, da lösungsmittelhaltige Putze die Hartschaumplatten angreifen und die Schaumstruktur zerstören. Nun weisen die bisher verwendeten wäßrigen Dispersionsputze den Nachteil auf, daß sie bei kaltem und feuchtem Wetter nur sehr langsam aushärten und bei tiefen Temperaturen unterhalb 5°C praktisch nicht mehr anwendbar sind.

Aus der DE 32 09 854 ist ein Putz bekannt, der auf Polystyrol-Hartschaumplatten aufgebracht werden kann, ohne die Schaumstruktur anzugreifen, und der auch bei kalter Witterung gut verarbeitbar ist. Nachteilig an diesem System ist der aus ökologischer Sicht sehr hohe Gehalt an organischen Lösemitteln.

Wie gesagt, funktioniert die physikalische Trocknung wasserhaltiger Beschichtungssysteme zuverlässig nur bei Temperaturen deutlich über dem Gefrierpunkt.

Dispersionsgebundene Beschichtungsmassen, wie sie z.B. in der DE 35 36 261 und der DE 35 36 262 beschrieben sind, härten durch chemische Reaktion. Voraussetzung ist jedoch ein hoher Bindemittelgehalt, wie er z.B. in Farben Verwendung findet. Hochgefüllte Putz- und Spachtelmassen weisen jedoch nur geringe Bindemittelanteile auf, so daß die chemische Reaktion im wesentlichen unterbunden wird.

Die EP 728 822 beschreibt eine wasserhaltige dispersionsgebundene Farbe, die durch die Zugabe von Glykol schnelltrocknend und auch bei tiefen Temperaturen einsetzbar ist. In dickeren Schichten eingesetzt, verhindert jedoch der Anteil an Glykol eine durchgehende Trocknung, da nach einer Oberflächenfilmbildung die weitere Trocknung unterbunden wird. Ein Ablösen bzw. Abscheren des Systems ist die Folge.

Ausgehend von diesem Stand der Technik liegt der Erfindung die Aufgabe zugrunde, eine Beschichtungsmasse der eingangs genannten Art zu schaffen, die eine Verarbeitung trotz Verzicht auf den Einsatz von Lösungsmitteln auch bei tiefen Temperaturen ermöglicht und bei der Frostbeständigkeit bis -5°C gegeben ist.

Die Beschichtungsmasse nach der Erfindung, bei der die vorgenannte Aufgabe gelöst ist, ist im wesentlichen gekennzeichnet durch einen den Gefrierpunkt erniedrigenden hohen Salzgehalt (dissoziierende Salze aus organischen und anorganischen Molekülen) sowie chemische und gegebenenfalls UV-Vernetzer, die durch eine pH-Wert-Einstellung größer als 9 mit Ammoniak blockiert sind, bis durch Ammoniakverdunstung der Abbindemechanismus in Funktion tritt.

Die Erfindung basiert somit auf der Erkenntnis, daß überraschenderweise mit den ebenfalls chemisch härtenden Dispersionen der EP 728 822 die Formulierung hochgefüllter bindemittelarmer Beschichtungsmassen gelingt, wenn auf die Zugabe von glykolhaltigen Lösemitteln verzichtet wird, vorausgesetzt daß zur Ermöglichung einer Trocknung bei tiefen Temperaturen das Gefrieren des vorhandenen Wassers nach dem Tausalzprinzip durch einen hohen Salzgehalt unterbunden wird. Die eingebauten chemischen und gegebenenfalls UV-Vernetzer bilden an der Beschichtungsoberfläche eine Haut und machen sie nach einer Ablüftung von ca. 4 Stunden selbst bei Temperaturen bis -5°c und hohen Luftfeuchten regenfest.

Die Beschichtungsmasse gemäß der Erfindung besteht somit im wesentlichen aus einer Kunstharzdispersion mit einem hohen Salzgehalt und chemischen sowie gegebenenfalls UV-Vernetzern. Um die gewünschte Funktion sicherzustellen, ist eine pH-Einstellung notwendig, die im Vergleich zu der gemäß der EP 728 822 einen Wert größer als pH 9 verlangt. Der Vernetzungs- bzw. Abbindemechanismus tritt dann erst in der Trocknungsphase aufgrund des infolge der Ammoniakverdunstung sinkenden pH-Wertes in Funktion.

Als besonders zweckmäßig hat sich eine Beschichtungsmasse erwiesen, die sich durch einen den Gefrierpunkt auf -5°C erniedrigenden Salzgehalt auszeichnet.

Der in feuchtkalten Jahreszeiten auf unseren Breitengraden in den Monaten Oktober bis April bislang gegebene Nachteil, daß die Applikation wäßriger Beschichtungssysteme an Fassaden mit dem Risiko verbunden ist, daß das in den Beschichtungsstoffen enthaltene Wasser zu langsam verdunstet und beim Eintreten von Nachtfrösten der Beschichtungsstoff gefrieren kann, ist bei Verwendung der vorgenannten Beschichtungsmasse nach der Erfindung zur außenseitigen Armierungs- und Deckbeschichtung eines Fassadensystems, insbesondere eines Wärmedämmverbundsystems ausgeschaltet. Die bislang gegebene Gefahr, daß zu früh einsetzender Regen die viel zu langsam trocknenden Putze, Wandbeläge, Spachtelmassen oder Anstrichstoffe, insbesondere an Flächen mit geringem Dachüberstand oder Wetterseiten anlöst und abregnet, ist beseitigt. Auch bis unter 0°C fallenden Temperaturen während der feuchtkalten Jahreszeiten, wenn tagsüber Plustemperaturen und nachts Temperaturen im Gefrierpunktbereich und darunter herrschen, wird das Beschichtungssystem, das tagsüber nicht genügend getrocknet ist, nicht nachts durch Frost geschädigt, da der hohe Salzgehalt noch vorhandenes Wasser am Gefrieren hindert und die eingebauten Vernetzer an der Beschichtungsoberfläche eine Haut bilden und sie nach vierstündiger Ablüftung selbst bei tiefen Temperaturen und hohen Luftfeuchten regenfest machen.

Es ist deshalb verständlich, daß die Erfindung somit in besonders vorteilhafter Weise die Applizierbarkeit wäßriger Beschichtungsmassen bei Deckbeschichtungen von Fassadensystemen, insbesondere Wärmedämmverbundsystemen auch in Jahreszeiten mit relativ niedrigen Temperaturen ermöglicht. Die Betriebe des Bausektors sind folglich nicht mehr an die Monate gebunden, in denen mit Temperaturen über 0°C sicher gerechnet werden kann.

## Patentansprüche

1. Beschichtungsmasse mit einer filmbildenden wäßrigen Kunstharzdispersion, gekennzeichnet durch einen den Gefrierpunkt erniedrigenden hohen Salzgehalt sowie chemische und gegebenenfalls UV-Vernetzer, die durch eine pH-Wert-Einstellung größer als 9 mit Ammoniak blockiert sind, bis durch Ammoniakverdunstung der Abbindemechanismus in Funktion tritt.

2. Beschichtungsmasse nach Anspruch 1, gekennzeichnet durch einen den Gefrierpunkt auf -5°C erniedrigenden Salzgehalt.

3. Verwendung der Beschichtungsmasse nach den Ansprüchen 1 und 2 zur außenseitigen Armierungs- und Deckbeschichtung eines Fassadensystems, insbesondere eines Wärmedämmverbundsystems.
